# EUROPEAN PATENT SPECIFICATION

(11) **EP 1 833 267 B1**
(45) Date of publication and mention of the grant of the patent: **04.05.2016**
(21) Application number: 04802492.1
(22) Date of filing: 21.12.2004
(51) Int. Cl.: H04M 3/53, H04Q 3/00, H04N 5/00, H04M 3/42, H04N 21/231, H04N 21/239, H04L 29/08

(54) **A METHOD AND AN APPARATUS OF CENTRALIZED STORING MULTIMEDIA DATA**
VERFAHREN UND VORRICHTUNG ZUR ZENTRALISIERTEN SPEICHERUNG VON MULTIMEDIA-DATEN
PROCEDE ET APPAREIL DE STOCKAGE CENTRALISE DE DONNEES MULTIMEDIA

(43) Date of publication of application: 12.09.2007
(73) Proprietor: ZTE Corporation, Guangdong 518057 (CN)
(72) Inventor: WANG, Yuan XUE, Xianghui ZTE Plaza, Shenzhen, Guangdong 518057 (CN); ZHANG, Wei XUE, Xianghui ZTE Plaza, Shenzhen, Guangdong 518057 (CN); WANG, Jingping XUE, Xianghui ZTE Plaza, Shenzhen, Guangdong 518057 (CN)
(74) Representative: Grünecker Patent- und Rechtsanwälte PartG mbB
(86) International application number: PCT/CN2004/001479
(87) International publication number: WO 2006/066443

(56) References cited:
- EP-A1- 0 770 964
- WO-A1-00/18096
- CN-A- 1 405 702
- CN-A- 1 549 545
- US-A- 5 956 716
- US-A- 2002 066 107

## Description

The present invention relates to an apparatus and a method using distributing processing and centralized storage management in the field of Intelligent Network for implementing mass storing and real-time read of multimedia data, particularly for high-function application with a high requirement on storage capacity (TB level) and real-time capability in an intelligent network, such as service of voice mail, coloring ring back tone, multimedia messaging, etc.

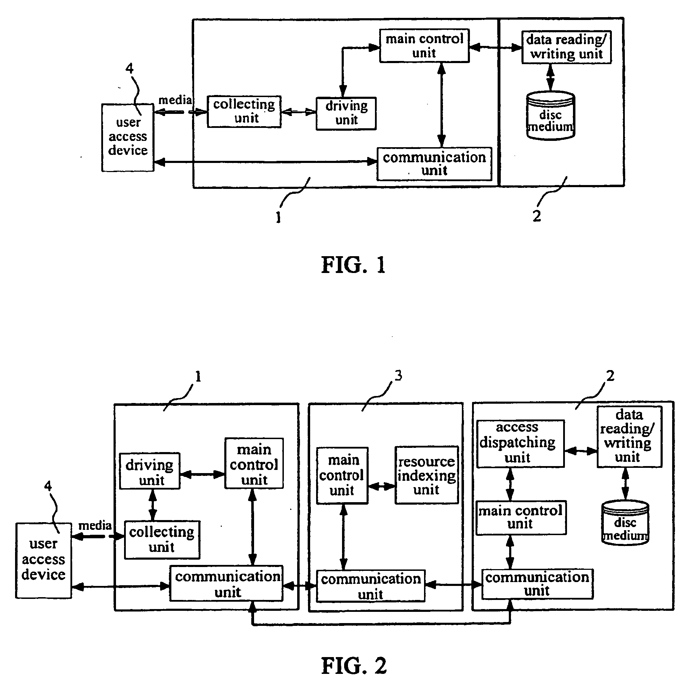

As it is known, the service of voice mail, voice short message, coloring ring back tone, and multimedia messaging are the applications basing on real-time storing and read of user media data (audio record data and image data). They all demand a common device: media storage device, as shown in Fig. 1: the media storage device is composed of two modules: a media processing module 1 and a media data module 2. The principle of implementing audio record/facsimile transmission and playback/facsimile reception of the user is as follows:
The process of user's audio record/facsimile transmission: the operation of the audio record/facsimile transition of the user getting access by a user access device and transmitting the operation request for the audio record/facsimile collection to a main control unit via a communication unit; then the main control unit notifying a driving unit of instructing a collecting unit to start the process of the audio record/facsimile collection; the driving unit notifying the main control unit after having collected the audio/facsimile data; and the main control unit organizing the collected data and notifying a data reading/writing unit of storing the data.

The process of user's playback/facsimile reception: the operation of the playback/facsimile reception of the user getting access by the user access device and forwarding the operation request for playback/facsimile reception to the main control unit via the communication unit; the main control unit sending a reading/writing request to a data reading/writing unit firstly; and notifying the driving unit of instructing the collecting unit to start the process of the playback/facsimile reception after having obtained a certain quantity of data, until the media data being completely sent to the user.

US 5,956,716 discloses a system and method for delivery of video data over a computer network.

In the view of the above principle of implementation, the existing media storage device contains the following defects:
① A bad extensibility of the system: in the view of the principle of implementation, the media processing module and the media data module cannot be separated, hence the extension only can be conducted to the collecting units in the media processing module when necessary, however, the number of the collecting units in each media storage device is limited.
② A limited media memory capacity: owing to the bad extensibility of the system, the media data module cannot be extended merely; in addition, the disc capacity of each media storage device is limited.

The technical problem that the present invention aims to settle is to provide centralized storage apparatus and method for multimedia data, so as to improve the extensibility of a media storage device and enlarge the media storage capacity of the media storage device.

In order to achieve the above object of the invention, the present invention provides a centralized storage apparatus for multimedia data, comprising: a media processing module and a media data module connected with each other, wherein it further comprises a media dispatching module provided between media processing module and media data module using the separation mode in which the media processing module and the media data module are extensible, respectively, and connected to said media processing module and media data module via network respectively; said media dispatching module being used for implementing the supervision and centralized management of media data and the load sharing of the media data module, wherein said media processing module is used for receiving the user's operation request and reporting results of the operation to the user; collecting the media data of the user, organizing and buffering the collected data, and transmitting said data to the designated media data module for storing; and obtaining stable media data streams from the designated media data module, and transmitting said media data to the user; said media data module is used for receiving the request for the media processing module to store and read the media data, organizing and storing the received data, and providing said media processing module with stable media streams; said media dispatching module is used for supervision and load sharing of the media data module, and providing said media processing module with a resource index function.

In the above centralized storage apparatus for multimedia data, said media processing module comprises: a collecting unit, a driving unit, a communication unit and a main control unit. Said collecting unit interacts with the driving unit and is used for accomplishing collection and transmission of the media data. Said driving unit is used for receiving operation commands from the main control unit to instruct said collecting unit to conduct corresponding actions and reporting the results of operations to said main control unit. Said communication unit is used for connecting said media processing module with a user access device, the media dispatching module and the media data module, communicating with them via TCP/IP protocol, and accomplishing transmission of messages there-between. Said main control unit is used for receiving commands from the user access device, reports from the driving unit and response messages from said media dispatching module and said media data module; reporting the results of the operations to the user access device, sending operation commands to the driving unit, sending a index request to the media dispatching module, and sending a request for storing to the media data module; accomplishing command analysis of the user access device; performing distributing management of system multi-channels resources; applying for obtaining a media data module from the media dispatching module, wherein user identifiers being stored in the media data module; when necessary, sending operation commands to the driving unit; receiving and organizing the media data received from said collecting unit or said media data module, and transmitting the same to said media data module or said collecting unit.

In the above centralized storage apparatus for multimedia data, said driving unit provides a function interface for accomplishing basic operations of said collecting unit, such as initializing the collecting unit, starting playback/audio recording/facsimile, and halting playback/audio recording/facsimile, and sending a request for media data to said collecting unit and main control unit.

In the above centralized storage apparatus for multimedia data, said media dispatching module further comprises: a resource indexing unit, a communication unit and a main control unit. Said resource indexing unit is used for receiving commands from the main control unit, accomplishing a resource search function, and providing an inquiry interface to the external. Said communication unit is used for accomplishing the transmission of communication messages via TCP/IP protocol to said media processing module and said media data module. Said main control unit is used for receiving commands from said media processing module and said media data module as well as indexing results of the resource indexing unit; sending a request for supervision to said media data module; accomplishing distributing management of internal channels of the system, indexing the user identifiers of said media processing module, managing said media data module dynamically, and analyzing as well as distributing the load of the media data module balancably.

In the above centralized storage apparatus for multimedia data, said media data module comprises: an access dispatching unit, a data reading/writing unit, a data storage medium, a main control unit, and a communication unit. Said access dispatching unit is provided between said main control unit and data reading/writing unit, and is used for accomplishing the management of messages from the main control unit, the load sharing of operations of the data reading/writing unit, as well as distributing management of data buffers. Said data reading/writing unit is used for receiving a request from said access dispatching unit and returning results of the operations to the access dispatching unit and conducting bottom operations for media data access operations. Said communication unit is used for accomplishing transmission of communication messages via TCP/IP protocol to said media processing module and said media dispatching module. Said main control unit is used for receiving a request from said media processing module and a request for supervision from said media dispatching module, and reporting results to said media processing module and said media dispatching module; accomplishing distributing management of multi-channels of the system, analyzing the request from the media processing module and responding thereto, and sending a request for storing to the access dispatching unit as required. Said data storage medium is used for accomplishing the media data storing according to the operation commands of said data reading/writing unit.

In above centralized storage apparatus for multimedia data, said media processing module and/or said media data module are a plurality of media processing modules and/or media data modules provided in parallel.

In above centralized storage apparatus for multimedia data, said data storage medium is a disc medium.

In order to implement said object much better, the present invention further provides a centralized storage method for multimedia data, wherein a media processing module and a media storage module are provided in separation mode in which the media processing module and the media data module are extensible, respectively, and a media dispatching module is provided for implementing centralized management of media data and load sharing of the media data module, wherein the centralized storage method for multimedia data comprises the following steps: a storing step, when user media data need to be stored, first of all, registering user data identifiers at a media dispatching module, the media dispatching module assigning one media data module to a media processing module according to a load sharing mechanism, and the media processing module storing the collected user media data via network; a reading step, when the user media data need to be read, the media dispatching module indexing the media data module, in which the user data are stored, according to the user data identifiers, and the media processing module obtaining the user data from said media data module via network and transmitting the user data to the user.

The above centralized storage method for multimedia data is characterized in that said storing step further comprises the following steps: step 1, creating user identifiers by service and sending a request for media storing to the media processing module via a user access device, a main control unit in the media processing module sending a index request to the media dispatching module basing on the identifiers of said user; if the media dispatching module searches out the presence of said identifiers, then obtaining a media data module number and returning it to the main control unit of the media processing module, and going to the next step; if the search result shows the absence of said identifiers, assigning one media data module number according to the load sharing mechanism and registering it in a resource indexing unit, returning it to the media processing module, and going to the next step; step 2, the main control unit of the media processing module sending again a request to starting data storage to the media data module after having obtained the media data module from the media dispatching module, after the corresponding media data module has received said request, the main control unit and an access dispatching unit thereof distributing channel resources and buffer resources respectively, and returning a response to the media processing module if this distribution is successful, going to the next step; otherwise, going to step 5; step 3, the main control unit of the media processing module instructing a driving unit of starting to collect the media data, after a collecting unit has collected the media data, the driving unit informing the main control unit, the main control unit organizing and buffering the collected user media stream data while transmitting the data in the buffer to the corresponding media data module by network transmission; step 4, after the media data are successfully stored, the media processing module informing the media dispatching module of confirming the data information of said user; otherwise, logging off the data information of said user, and returning results to the user access device; step 5, the media processing module sending an error request to the user access device and the media dispatching module, the media dispatching module logging off the registered user identifiers after having received said error request

In above centralized storage method for multimedia data, said storing step further comprises the following steps:
step 1, sending a request of designated user identifiers for media playing to the media processing module via a user access device, the media processing module sending a index request to a main control unit of the media dispatching module, the main control unit of the media dispatching module conducting a search in a resource indexing unit, if a corresponding media data module number is obtained, returning to the media processing module, and going to the next step; if said user identifiers are not found yet, returning "Resource Not Found", and going to step 3; step 2, the media processing module obtaining media data of user designated identifiers from the corresponding media data module via network, the media data module returning media data to the media processing module in the manner of streams at a stable rate, until the media data are completely returned; after the media processing module has obtained a certain quantity of the media data, the main control unit in the media processing module sending a command for starting to play media to a driving unit and transmitting the media data in buffer, which are obtained from the media data module, according to the requirement of a collecting unit, so as to provide the user with stable media streams; step 3, returning a failure message to the user access device if the media collecting unit fails to play halfway or can not find out the user resources.

Having used the above solutions, as a separation of the media processing module and the media data module is implemented, the number of the media processing modules can be linearly extended, so that a load sharing is implemented there-between, and the total performance of the media processing module can be greatly improved; in addition, since a centralized management and distribution of the media data module is implemented, the number of the media data module can also be linearly extended up to the storage capacity required by the user, the present invention can greatly improve the capacity and extensibility of the media storage device.
Fig. 1 is a schematic diagram that shows the structure of an existing media storage device;
Fig. 2 is a schematic diagram that shows a media storage device according to the present invention; and
Fig. 3 is a schematic diagram that shows an extended example of a media storage device according to the present invention.

The present invention will be further described by combining with the figures and embodiments in the following.

As shown in Fig. 2, the present invention is mainly composed of three modules: a media processing module 1, a media data module 2 and a media dispatching module 3, the three are interconnected via network. The present invention implements a great storage capacity and a high extendibility of the processing capability and storage capability by using the mode in which the media processing and media storing are separated, and implements a centralized management of media data and a load sharing mechanism of the media data module by manner of user data registering. The implementation of the present invention can be divided into implementation of media collection and implementation of media transmission.

As shown in Fig. 2, the process of media collection comprises: a user sends a request for media collection operation (such as audio recording, facsimile reception, etc.) to the media processing module 1 by a user access device 4 via TCP/IP protocol; the media processing module 1 indexes a media data module number to the media dispatching module and informs the corresponding media data module 2 of getting ready for receiving media data; after the system resources are successfully prepared, the media processing module 1 starts to collect the media data from the user, organizes and buffers said media data, and transmits the media data to the media data module 2 until the collection of the user media data is completed.

As shown in the figure, the process of media transmission comprises: the user sends a request for media transmission operation (such as playback, facsimile sending, etc.) to the media processing module 1 by the user access device via TCP/IP protocol; the media processing module 1 indexes the media data module number (the media data are stored in that media data module) to the media dispatching module 3 and informs the corresponding media data module 2 of preparing the corresponding media data; after the system resources are successfully prepared, the media processing module 1 obtains the media data from the corresponding media data module and organizes and buffers the data; the media processing module 1, having obtained a certain quantity of data, starts to transmit the data to the user, until the transmission of the user media data is completed.

As the media processing and the media storing are separated, the media processing module 1 is mainly provided for receiving the operation request for the user and reporting results of the operation to the user; collecting the media data of the user, organizing and buffering the collected data, and transmitting said data to the designated media data module for storage; obtaining a stable media data stream from the designated media data module and transmitting said media data to the user. In the media processing module 1, a collecting unit is provided for collecting and transmitting the media stream data; a driving unit serves as an interface function between the collecting unit and a main control unit, it informs the main control unit after the collecting unit collected data; the driving unit also informs the main control unit when the collecting unit needs media data; the main control unit accomplishes the analysis of the operation commands from the user and distributed management of multi-channels resources, applies for a media data module 2 from the media dispatching module 3, after the audio recording and facsimile data of the user are collected, the main control unit buffers the data and transmits the data in the buffers to the media data module 2 via network; when the collecting unit needs the user media data, the main control unit reads the media data of the user from the media data module 2 via network and transmits the media data to the collecting unit via the driving unit, and to the user finally. As seen from the above process, the media processing module 1 highly focuses on mid-processing of the user media data for each channel and is irrelative to the particular media storing information, thus, the media processing module 1 can be extended online in parallel, and its processing capability to access user can be improved linearly.

The media data module 2 is mainly provided for receiving a request for storing and reading media data from the media processing module 1, and organizing the received data and storing them in the medium; and providing a stable media stream to the media processing module 1. Wherein a main control unit receives the request for storage and reading and analyses said request, distributes the system channel resources, initiates operation to an access dispatching unit when necessary, and reporting the results to the media processing module 1 thereafter; it also receives a request for supervision from the media dispatching module 3 and responds to the current state. In order to improve the efficiency of the system, one media data module 2 may comprise a plurality of main control units and process different channels simultaneously. A data reading/writing unit mainly performs bottom operations for database and disc, and in order to improve the efficiency of the system, a media data module can also comprises a plurality of data reading/writing units, which are dispatched and distributed by the access dispatching unit. The access dispatching unit mainly performs management of messages from the main control unit and distribution and dispatching of the data reading/writing unit, and distributes and manages data buffers. In order to ensure the real-time capability of the media streams provided to the external, the technique of data prefetching can be used in the access dispatching unit, viz. always keeping a certain quantity of buffer data in the data buffer before transmitting data to the external. This module, in order to implement the compatibility of various media storing, should record the type and user identifiers of the media when storing a media stream, so that fast locating is achieved during the reading of the user and the performance of the system is improved. As the storage capacity of any individual device is limited, in order to extend the capacity and storage capacity of the system smoothly, media storage device according to the present invention can be extended in parallel, each set of media data modules 2, which being added thereto, should be registered at the media dispatching module 3 and be managed and dispatched by the media dispatching module 3, as shown in Fig. 2.

Since the said apparatus adopts the mode of extending the media data module 2 in parallel, the problem about centralized management and load sharing of the media data must be solved, thus, the media dispatching module 3 is introduced. The media dispatching module 3 mainly comprises a main control unit and a resource indexing unit. During the media storing, the media processing module 1 sending a request to apply for resources to the main control unit of the media dispatching module 3, the main control unit distributes, according to a load sharing mechanism, one media data module 2 to the media processing module 1 for storing and registers the user identifiers, in successful case receives a confirmation request from the media processing module 1, in failed case receives a unregistration request from the media processing module 1; when the storing of the media being performed, the main control unit indexes the location of the media information of the user according to the user identifiers from the resource indexing unit, for the following processing. The resource indexing unit mainly achieves a search function for the user identifier. As a result, the media dispatching module 3 focuses on one task, in addition, it is not very frequently operated by the media processing module 1, therefore, a very high processing capability thereof is not demanded, and it should not become a choke point in this apparatus and can be physically integrated with the media data module 2. An access unit can be added into the media dispatching module 3 for the media data respectively stored in each media data module 2, said access unit provides an inquiry interface to external, performs inquiry management for all the media storing data, and said interface does not require a high real-time capability.

The process of media storing and reading is explained in detail in the follows by combining with the Fig. 2:
Wherein the media storing step comprises:
   Step 1: user identifiers are created by service and a request for media storing is sent to the media processing module via the user access device, the main control unit in the media processing module sends an index request to the media dispatching module basing on the identifiers of said user. If the media dispatching module searches out the presence of said identifiers , then a media data module number is obtained and returned to the main control unit of the media processing unit, and go to the next step; if the search result shows the absence of said identifiers, one media data module number is assigned according to the load sharing mechanism, registered in the resource indexing unit and returned to the media processing module, and go to the next step.
   Step 2: The main control unit of the media processing module sends again a request for starting the data storing to the media data module after having obtained the media data module from the media dispatching module, after the corresponding media data module has received said request, the main control unit and an access dispatching unit thereof distribute the channel resources and buffer resources, and return a response to the media processing module if this distribution is successful, and go to the next step; otherwise, go to Step 5.
   Step 3: The main control unit of the media processing module instructs a driving unit of starting to collect the media data; after the collecting unit has collected the media data, the driving unit informs the main control unit; the main control unit organizes and buffers the collected user media stream data, while the data in the buffer are transmitted to the corresponding media data module by network transmission.
   Step 4: After the media data are successfully stored, the media processing module informs the media dispatching module of confirming the data information of said user; otherwise, the data information of said user is logged off, and results are returned to the user access device.
   Step 5: The media processing module sends an error request to the user access device and the media dispatching module, the media dispatching module logs off the registered user identifiers after having received said error request.

Wherein the media playing step comprises:
Step 1: A request of a designated user identifiers for media playing is sent to the media processing module via the user access device, the media processing module sends a index request to the main control unit of the media dispatching module, the main control unit of the media dispatching module conduct a search in a resource indexing unit, if a corresponding media data module number is obtained, then it will be returned to the media processing module, and go to the next step; if said user identifiers are not found yet, "Resource Not Found" is returned, and go to step 3.
Step 2: The media processing module obtains media data of user designated identifiers from the corresponding media data module via network, the media data module returns the media data to the media processing module in the manner of streams at a stable rate, until the media data are completely returned; after the media processing module has obtained a certain quantity of the media data, the main control unit in the media processing module sends a command for starting to play media to the driving unit and transmits the media data in the buffer, which are obtained from the media data module, according to the requirement of a collecting unit, so as to provide the user with stable media streams.
Step 3: A failure message is returned to the user access device if the media collecting unit fails to play halfway or can not find out the user resources.

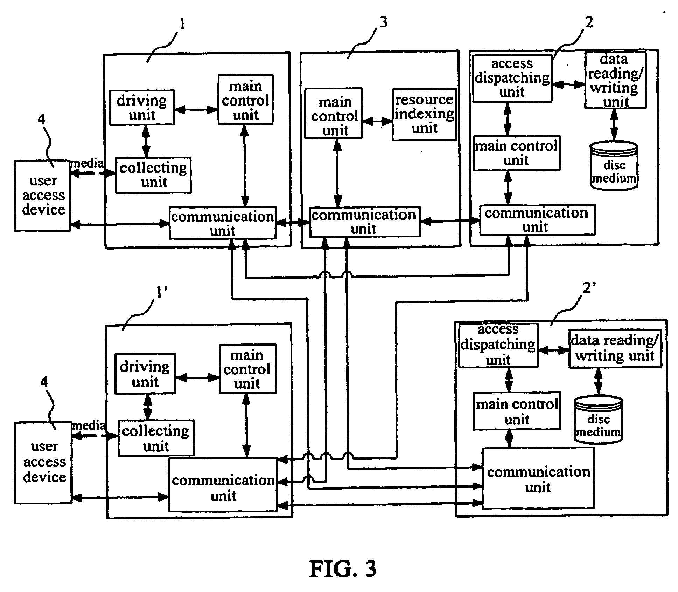

The object of the separation of the media processing and media storing according to the present invention is to implement a convenient extendibility of the media processing module and media data module. And now the system structure and interrelation after the extension are explained by taking an example. As shown in Fig. 3, two media processing modules 1, 1' and two media data modules 2, 2' are extended. Of course there are also other extension methods, for instance, two media processing modules and three media data modules, etc. In Fig. 3, the five modules are connected by a network and transmission among them is executed by TCP/IP protocol, the connection among the two media processing module and the two media data module is a net shaped structure, viz. the media processing module 1 not only connects respectively to the media data module 2 and media data module 2', but also connects to the media dispatching module 3; the media processing module 1' not only connects respectively to the media data module 2 and media data module 2', but also connects to the media dispatching module 3. Thus, the extended media data modules play as backups one another, so that the stability of the system is improved in aspect of the total performance.

While the present invention has been particularly shown and described with reference to the preferable embodiments thereof, it will be understood by those skilled in the art that any amendment or equivalent replacement made to the technical solution of the present invention without departing from the spirit and scope of the present invention shall all be covered by the scope of the claims of the present invention.

### Industrial Applicability

Having used the above solutions, as said centralized storage apparatus for multimedia data has implemented a separation of the media processing module and the media data module, the number of the media processing modules can be linearly extended, so that a load sharing is implemented there-between, and the total performance of the media processing module can be greatly improved. The present invention can be widely applied for the high-function service with a high requirement on great storage capacity (TB level) and real-time capability in an intelligent network, such as service of voice mail, coloring ring back tone, multimedia messaging, etc.

## Claims

1. A centralized storage apparatus for multimedia data comprising:
a media processing module (1); and a media data module (2) connected with each other;
**characterized in that** said apparatus further comprises
a media dispatching module (3) provided between the media processing module (1) and media data module (2) using the separation mode in which the media processing module (1) and the media data module (2) are extensible, respectively, and connected to said media processing module (1) and said media data module (2) via network, respectively; said media dispatching module (3) being used for implementing the supervision and centralized management of media data and the load sharing of the media data module (2); wherein
said media processing module (1) is used for receiving the user's operation request and reporting results of the operation to the user, collecting the media data of the user, organizing and buffering the collected data, and transmitting said data to the designated media data module (2) for storing; and obtaining stable media data streams from the designated media data module (2), and transmitting said media data to the user;
said media data module (2) is used for receiving the request for the media processing module (1) to store and read the media data, and organizing and storing the received data, as well as providing said media processing module (1) with stable media streams;
said media dispatching module (3) is used for supervision and load sharing of the media data module (2), and providing said media processing module (1) with a resource index function.

2. The centralized storage apparatus for multimedia data according to Claim 1, **characterized in that** said media processing module (1) comprises:
a collecting unit, a driving unit, a communication unit and a main control unit;
said collecting unit interacts with the driving unit and is used for accomplishing the collection and transmission of the media data;
said driving unit is used for receiving operation commands from the main control unit to instruct said collecting unit to conduct corresponding actions, and reporting the results of operations to said main control unit;
said communication unit is used for connecting said media processing module to a user access device (4), the media dispatching module and the media data module, communicating with them via TCP/IP protocol, and accomplishing transmission of messages there-between;
said main control unit is used for receiving commands from the user access device (4), reports from the driving unit and response messages from said media dispatching module (3) and said media data module (2); reporting the results of operation to the user access device (4), sending operation commands to the driving unit, sending a index request to the media dispatching module (3), and sending a request for storing to the media data module (2); accomplishing command analysis of the user access device (4); performing distributing management of system multi-channels resources; applying for obtaining a media data module (2) from the media dispatching module (3), wherein user identifiers being stored in the media data module (2); when necessary, sending operation commands to the driving unit; receiving and organizing the media data received from said collecting unit or said media data module (2), and transmitting the same to said media data module (2) or said collecting unit.

3. The centralized storage apparatus for multimedia data according to Claim 2, **characterized in that** said driving unit provides a function interface for accomplishing basic operations of said collecting unit, such as initializing the collecting unit, starting playback/audio recording/facsimile, and halting playback/audio recording/facsimile, and sending a request for media data to said collecting unit and said main control unit.

4. The centralized storage apparatus for multimedia data according to any of Claims 1 to 3, **characterized in that** said media dispatching module (3) further comprises: a resource indexing unit, a communication unit and a main control unit;
said resource indexing unit is used for receiving commands from the main control unit,
accomplishing a resource search function, and providing an inquiry interface to the external;
said communication unit is used for accomplishing the transmission of communication messages via TCP/IP protocol to said media processing module (1) and said media data module (2);
said main control unit is used for receiving commands from said media processing module (1) and said media data module (2) as well as indexing results of the resource indexing unit; sending a request for supervision to said media data module (2); accomplishing distributing management of internal channels of the system, indexing the user identifiers of said media processing module (1), managing said media data module (2) dynamically, and analyzing as well as distributing the load of the media data module balancably.

5. The centralized storage apparatus for multimedia data according to any of Claims 1 to 4, **characterized in that** said media data module (2) comprises: an access dispatching unit, a data reading/writing unit, a data storing medium, a main control unit, and a communication unit;
said access dispatching unit is provided between said main control unit and said data reading/writing unit, and is used for accomplishing the management of messages from the main control unit, the load sharing of operations of the data reading/writing unit, as well as distributing management of data buffers;
said data reading/writing unit is used for receiving a request from said access dispatching unit (3) and returning results of the operations to the access dispatching unit (3) and conducting bottom operations for media data access operations;
said communication unit is used for accomplishing transmission of communication messages via TCP/IP protocol to said media processing module (1) and said media dispatching module (3);
said main control unit is used for receiving a request from said media processing module (1) and a request for supervision from said media dispatching module (3), and reporting results to said media processing module (1) and said media dispatching module (3); accomplishing distributing management of multi-channels of the system, analyzing the request from the media processing module (1) and responding thereto, and sending a request for storing to the access dispatching unit (3) as required;
said data storage medium is used for accomplishing the media data storing according to the operation commands of said data reading/writing unit.

6. The centralized storage apparatus for multimedia data according to any of Claims 1 to 5, **characterized in that** said media processing module (1) and/or said media data module (2) are a plurality of media processing modules and/or media data modules provided in parallel.

7. The centralized storage apparatus for multimedia data according to Claim 5, **characterized in that** said data storage medium is a disc medium.

8. A centralized storage method for multimedia data, **characterized in that**
a media processing module (1) and a media storage module (2) are provided in separation mode in which the media processing module (1) and the media data module (2) are extensible, respectively; and
a media dispatching module (3) is provided for implementing centralized management of media data and load sharing of the media data module (2) according to user identifier;
wherein
the method comprises the following steps:
a storing step, when user media data need to be stored, first of all, registering user data identifiers at the media dispatching module (3), and the media dispatching module (3) assigning one media data module (2) to a media processing module (1) according to a load sharing mechanism, and the media processing module (1) storing the collected user media data via network;
a reading step, when the user media data need to be read, the media dispatching module (3) indexing the media data module (2), in which the user data are stored, according to the user data identifiers, and the media processing module (1) obtaining the user data from said media data module (2) via network and transmitting the user data to the user.

9. The centralized storage method for multimedia data according to Claim 8, **characterized in that** said storing step further comprises the following steps:
step 1, creating user identifiers by service and sending a request for media storing to the media processing module (2) via a user access device (4), a main control unit in the media processing module (1) sending a index request to the media dispatching module (3) basing on the identifiers of said user; if the media dispatching module (3) searches out the presence of said identifiers, then obtaining a media data module number and return-ing it to the main control unit of the media processing module (1), going to the next step; if the search result shows the absence of said identifiers, assigning one media data module number according to the load sharing mechanism and registering it in a resource indexing unit, returning it to the media processing module (1), and going to the next step;
step 2, the main control unit of the media processing module (1) sending again a request to starting data storage to the media data module (2) after having obtained the media data module (2) from the media dispatching module (3), after the corresponding media data module (2) has received said request, the main control unit and an access dispatching unit thereof distributing channel resources and buffer resources, and returning a response to the media processing module (1) if this distribution is successful, and going to the next step; otherwise, going to step 5;
step 3, the main control unit of the media processing module instructing a driving unit of starting to collect the media data, after a collecting unit has collected the media data, the driving unit informing the main control unit, the main control unit organizing and buffering the collected user media stream data while transmitting the data in the buffer to the corresponding media data module (2) by network transmission;
step 4, after the media data are successfully stored, the media processing module (1) informing the media dispatching module (3) of confirming the data information of said user; otherwise, logging off the data information of said user, and returning results to the user access device (4);
step 5, the media processing module (1) sending an error request to the user access device (4) and the media dispatching module (3), the media dispatching module (3) logging off the registered user identifiers after having received said error request.

10. The centralized storage method for multimedia data according to Claim 8, **characterized in that**, said storing step further comprises the following steps:
step 1, sending a request of a designated user identifiers for media playing to the media processing module via a user access device, the media processing module sending a index request to a main control unit of the media dispatching module, the main control unit of the media dispatching module conducting a search in a resource indexing unit, if a corresponding media data module number is obtained, returning to the media processing module, and going to the next step; if said user identifiers are not found yet, returning "Resource Not Found", and going to step 3;
step 2, the media processing module obtaining media data of user designated identifiers from a corresponding media data module via network, the media data module returning media data to the media processing module in the manner of streams at a stable rate, until the media data are completely returned; after the media processing module has obtained a certain quantity of the media data, the main control unit in the media processing module sending a command for starting to play media to a driving unit and transmitting the media data in buffer, which are obtained from the media data module, according to the requirement of a collecting unit, so as to provide the user with stable media streams;
step 3, returning a failure message to the user access device if the media collecting unit fails to play halfway or can not find out the user resources.

## Patentansprüche

1. Zentralisierte Speichervorrichtung für Multimedia-Daten, umfassend:
ein Medien-Verarbeitungsmodul (1); und ein Medien-Datenmodul (2), die miteinander verbunden sind;
**dadurch gekennzeichnet, dass** die Vorrichtung des Weiteren umfasst
ein Medien-Verteilermodul (3), das zwischen dem Medien-Verarbeitungsmodul (1) und dem Medien-Datenmodul (2) angeordnet ist, wobei der Trennungsmodus eingesetzt wird, in dem das Medien-Verarbeitungsmodul (1) bzw. das Medien-Datenmodul (2) erweiterbar sind, und das mit dem Medien-Verarbeitungsmodul (1) bzw. dem Medien-Datenmodul (2) über ein Netzwerk verbunden ist, wobei das Medien-Verteilermodul (3) dazu dient, die Überwachung und das zentralisierte Management von Mediendaten sowie die Lastverteilung des Medien-Datenmoduls (2) zu implementieren; wobei
das Medien-Verarbeitungsmodul (1) dazu dient, die Vorgangsanforderung des Benutzers zu empfangen und die Ergebnisse des Vorgangs an den Benutzer zu berichten, die Mediendaten des Benutzers zu sammeln, die gesammelten Daten zu organisieren und zu puffern und die Daten an das gekennzeichnete Medien-Datenmodul (2) zur Speicherung zu senden; und stabile Medien-Datenströme von dem gekennzeichneten Medien-Datenmodul (2) abzurufen und die Mediendaten an den Benutzer zu senden;
wobei das Medien-Datenmodul (2) dazu dient, die Anforderungen an das Medien-Verarbeitungsmodul (1), die Mediendaten zu speichern und zu lesen, zu empfangen und die empfangenen Daten zu organisieren und zu speichern, sowie dazu, das Medien-Verarbeitungsmodul (1) mit stabilen Medien-Datenströmen zu versorgen;
wobei das Medien-Verteilermodul (3) zur Überwachung und Lastverteilung des Medien-Datenmoduls (2) dient und zum Bereitstellen einer Ressourcen-Indexfunktion für das Medien-Verarbeitungsmodul (1).

2. Zentralisierte Speichervorrichtung für Multimedia-Daten nach Anspruch 1, **dadurch gekennzeichnet, dass** das Medien-Verarbeitungsmodul (1) umfasst:
eine Sammeleinheit, eine Treibereinheit, eine Kommunikationseinheit und eine Hauptsteuereinheit;
wobei die Sammeleinheit mit der Treibereinheit interagiert und dazu dient, die Sammlung und Übertragung der Mediendaten durchzuführen;
wobei die Treibereinheit dazu dient, Vorgangsbefehle von der Hauptsteuereinheit zu empfangen und die Sammeleinheit zur Durchführung der entsprechenden Aktionen zu instruieren und die Ergebnisse der Vorgänge an die Hauptsteuereinheit zu berichten;
wobei die Kommunikationseinheit dazu dient, das Medien-Verarbeitungsmodul mit einer Benutzer-Zugriffsvorrichtung (4), dem Medien-Verteilermodul und dem Medien-Datenmodul zu verbinden, mit ihnen über ein TCP/IP-Protokoll zu kommunizieren und das Senden von Nachrichten dazwischen durchzuführen;
wobei die Hauptsteuereinheit zu Folgendem dient: Empfangen von Befehlen von der Benutzer-Zugriffsvorrichtung (4), Berichten von der Treibereinheit und Antwortnachrichten von dem Medien-Verteilermodul (3) und dem Medien-Datenmodul (2); Berichten der Ergebnisse des Vorgangs an die Benutzer-Zugriffsvorrichtung (4), Senden der Vorgangsbefehle an die Treibereinheit, Senden einer Indexanforderung an das Medien-Verteilermodul (3) und Senden einer Anforderung zum Speichern an das Medien-Datenmodul (2); Durchführen einer Befehlsanalyse der Benutzer-Zugriffsvorrichtung (4); Durchführen einer Verteilungsverwaltung der Mehrkanalressourcen des Systems; Beantragen des Abfragens eines Medien-Datenmoduls (2) von dem Medien-Verteilermodul (3), wobei die Benutzer-Identifikatoren in dem Medien-Datenmodul (2) gespeichert sind; bei Bedarf, Senden von Vorgangsbefehlen an die Treibereinheit; Empfangen und Organisieren der von der Sammeleinheit oder dem Medien-Datenmodul (2) empfangenen Mediendaten, und Senden derselben an das Medien-Datenmodul (2) oder die Sammeleinheit.

3. Zentralisierte Speichervorrichtung für Multimedia-Daten nach Anspruch 2, **dadurch gekennzeichnet, dass** die Treibereinheit eine Funktionsschnittstelle zum Durchführen von Grundvorgängen der Sammeleinheit bietet, wie beispielsweise das Initialisieren der Sammeleinheit, Starten von Wiedergabe/Audioaufzeichnung/Faksimile, und Anhalten von Wiedergabe/Audioaufzeichnung/Faksimile, und Senden einer Anforderung nach Mediendaten an die Sammeleinheit und die Hauptsteuereinheit.

4. Zentralisierte Speichervorrichtung für Multimedia-Daten nach einem der Ansprüche 1-3, **dadurch gekennzeichnet, dass** das Medien-Verteilermodul (3) des Weiteren umfasst:
eine Ressourcen-Indexierungseinheit, eine Kommunikationseinheit und eine Hauptsteuereinheit;
wobei die Ressourcen-Indexierungseinheit zum Empfangen von Befehlen von der Hauptsteuereinheit, zum Durchführen einer Ressourcen-Suchfunktion und zum Bereitstellen einer Anfrageschnittstelle für das externe Gerät dient;
wobei die Kommunikationseinheit zum Durchführen des Sendens von Kommunikationsnachrichten über das TCP/IP-Protokoll an das Medien-Verarbeitungsmodul (1) und des Medien-Datenmodul (2) dient;
wobei die Hauptsteuereinheit zu Folgendem dient: Empfangen von Befehlen von dem Medien-Verarbeitungsmodul (1) und dem Medien-Datenmodul (2) sowie von Indexierungsergebnissen von der Ressourcen-Indexierungseinheit; Senden einer Anforderung zur Überwachung an das Medien-Datenmodul (2); Durchführen der Verteilungsverwaltung der internen Kanäle des Systems, Indexieren der Benutzer-Identifikatoren des Medien-Verarbeitungsmoduls (1), dynamisches Verwalten des Medien-Datenmoduls (2), und Analysieren sowie ausgleichendes Verteilen der Last des Medien-Datenmoduls.

5. Zentralisierte Speichervorrichtung für Multimedia-Daten nach einem der Ansprüche 1 bis 4, **dadurch gekennzeichnet, dass** das Medien-Datenmodul (2) umfasst: eine Zugriffs-Verteilereinheit, eine Daten-Lese/Schreib-Einheit, ein Datenspeichermedium, eine Hauptsteuereinheit und eine Kommunikationseinheit;
wobei die Zugriffs-Verteilereinheit zwischen der Hauptsteuereinheit und der Daten-Lese/Schreib-Einheit angeordnet ist und zum Durchführen der Verwaltung von Nachrichten von der Hauptsteuereinheit dient, zur Lastverteilung der Vorgänge der Daten-Lese/Schreib-Einheit, sowie zur Verteilungsverwaltung der Datenpuffer;
wobei die Daten-Lese/Schreib-Einheit zum Empfangen einer Anforderung von der Zugriffs-Verteilereinheit (3) dient und zum Senden der Ergebnisse der Vorgänge an die Zugriffs-Verteilereinheit (3) und zum Durchführen von grundlegenden Vorgängen für die Mediendaten-Zugriffsvorgänge;
wobei die Kommunikationseinheit zum Durchführen des Sendens von Kommunikationsnachrichten über das TCP/IP-Protokoll an das Medien-Verarbeitungsmodul (1) und das Medien-Verteilermodul (3) dient;
wobei die Hauptsteuereinheit zu Folgendem dient: Empfangen einer Anforderung von dem Medien-Verarbeitungsmodul (1) und einer Anforderung zu Überwachung von dem Medien-Verteilermodul (3), und Berichten der Ergebnisse an das Medien-Verarbeitungsmodul (1) und das Medien-Verteilermodul (3); Durchführen der Verteilungsverwaltung der vielen Kanäle des Systems, Analysieren der Anforderung von dem Medien-Verarbeitungsmodul (1) und Antworten darauf, und Senden einer Anforderung zum Speichern an die Zugriffs-Verteilereinheit (3), wenn erforderlich;
wobei das Datenspeichermedium zum Durchführen der Mediendaten-Speicherung entsprechend den Vorgangsbefehlen der Daten-Lese/Schreib-Einheit dient.

6. Zentralisierte Speichervorrichtung für Multimedia-Daten nach einem der Ansprüche 1 bis 5, **dadurch gekennzeichnet, dass** das Medien-Verarbeitungsmodul (1) und/oder das Medien-Datenmodul (2) eine Vielzahl von Medien-Verarbeitungsmodulen und/oder Medien-Datenmodulen ist, die parallel angeordnet sind.

7. Zentralisierte Speichervorrichtung für Multimedia-Daten nach Anspruch 5, **dadurch gekennzeichnet, dass** das Datenspeichermedium ein Disc-Medium ist.

8. Zentralisiertes Speicherverfahren für Multimedia-Daten, **dadurch gekennzeichnet, dass**
ein Medien-Verarbeitungsmodul (1) und ein Medien-Speichermodule (2) in einem Trennungsmodus angeordnet sind, in dem das Medien-Verarbeitungsmodul (1) bzw. das Medien-Datenmodul (2) erweiterbar sind; und
einen Medien-Verteilermodul (3) zum Implementieren einer zentralisierten Verwaltung von Mediendaten und der Lastverteilung des Medien-Datenmoduls (2) entsprechend dem Benutzer-Identifikator angeordnet ist; wobei
das Verfahren die folgenden Schritte umfasst:
einen Speicherschritt, wenn Benutzer-Mediendaten gespeichert werden müssen, zum Registrieren, als erstes, von Benutzerdaten-Identifikatoren an dem Medien-Verteilermodul (3), wobei das Medien-Verteilermodul (3) ein Medien-Datenmodul (2) einem Medien-Verarbeitungsmodul (1) entsprechend einem Lastverteilungsmechanismus zuordnet und das Medien-Verarbeitungsmodul (1) die gesammelten Benutzer-Mediendaten über das Netzwerk speichert;
einen Leseschritt, wenn die Benutzer-Mediendaten gelesen werden müssen, bei dem das Medien-Verteilermodul (3) das Medien-Datenmodul (2), in welchem die Benutzerdaten gespeichert sind, entsprechend den Benutzerdaten-Identifikatoren indexiert, und das Medien-Verarbeitungsmodul (1) die Benutzerdaten aus dem Medien-Datenmodul (2) über das Netzwerk abruft und die Benutzerdaten an den Benutzer sendet.

9. Zentralisiertes Speicherverfahren für Multimedia-Daten nach Anspruch 8, **dadurch gekennzeichnet, dass** der Speicherschritt des Weiteren die folgenden Schritte umfasst:
Schritt 1, Erzeugen von Benutzer-Identifikatoren nach Dienst und Senden einer Anforderung nach Medienspeicherung an das Medien-Verarbeitungsmodul (2) über eine Benutzer-Zugriffsvorrichtung (4), wobei eine Hauptsteuereinheit in dem Medien-Verarbeitungsmodul (1) eine Indexanforderung an das Medien-Verteilermodul (3) basierend auf den Identifikatoren des Benutzers sendet; wenn das Medien-Verteilermodul (3) die Anwesenheit der Identifikatoren sucht, dann Abrufen einer Medien-Datenmodulnummer und Senden dieser an die Hauptsteuereinheit des Medien-Verarbeitungsmoduls (1), wobei mit dem nächsten Schritt fortgefahren wird; wenn das Suchergebnis die Abwesenheit der Identifikatoren anzeigt, Zuordnen einer Medien-Datenmodulnummer entsprechend dem Lastverteilungsmechanismus und Registrieren dieser in einer Ressourcen-Indexierungseinheit, Senden derselben an das Medien-Verarbeitungsmodul (1) und Fortfahren mit dem nächsten Schritt;
Schritt 2, erneutes Senden einer Anforderung zum Starten der Datenspeicherung von der Hauptsteuereinheit des Medien-Verarbeitungsmoduls (1) an das Medien-Datenmodul (2) nach dem Abfragen des Medien-Datenmoduls, nachdem das entsprechende Medien-Datenmodul (2) die Anforderung empfangen hat, wobei die Hauptsteuereinheit und eine Zugriffs-Verteilereinheit davon die Kanalressourcen und die Pufferressourcen verteilen und eine Antwort an das Medien-Verarbeitungsmodul (1) senden, wenn diese Verteilung erfolgreich ist und mit dem nächsten Schritt fortfahren; andernfalls, Fortfahren mit Schritt 5;
Schritt 3, in dem die Hauptsteuereinheit des Medien-Verarbeitungsmoduls eine Treibereinheit zum Beginnen mit der Sammlung der Mediendaten instruiert, nachdem eine Sammeleinheit die Mediendaten gesammelt hat, wobei die Treibereinheit die Hauptsteuereinheit informiert, die Hauptsteuereinheit den gesammelten Benutzer-Mediendatenstrom organisiert und puffert und gleichzeitig die Daten in dem Puffer an das entsprechende Medien-Datenmodul (2) über das Netzwerk sendet;
Schritt 4, in dem das Medien-Verarbeitungsmodul (1) das Medien-Verteilermodul (3) über das Bestätigen der Dateninformationen des Benutzers informiert, wenn die Mediendaten erfolgreich gespeichert wurden; andernfalls, Abmelden der Dateninformationen des Benutzers und Senden der Ergebnisse an die Benutzer-Zugriffsvorrichtung (4);
Schritt 5, in dem das Medien-Bearbeitungsmodul (1) eine Fehleranforderung an die Benutzer-Zugriffsvorrichtung (4) und das Medien-Verteilermodul (3) sendet, wobei das Medien-Verteilermodul (3) die registrierten Benutzer-Identifikatoren abmeldet, nachdem es die Fehleranforderung empfangen hat.

10. Zentralisiertes Speicherverfahren für Multimedia-Daten nach Anspruch 8, **dadurch gekennzeichnet, dass** der Speicherschritt des Weiteren die folgenden Schritte umfasst:
Schritt 1, Senden einer Anforderung eines gekennzeichneten Benutzer-Identifikators zum Abspielen von Medien an das Medien-Verarbeitungsmodul über eine Benutzer-Zugriffsvorrichtung, wobei das Medien-Verarbeitungsmodul eine Indexanforderung an eine Hauptsteuereinheit des Medien-Verteilermoduls sendet, die Hauptsteuereinheit des Medien-Verteilermoduls eine Suche in einer Ressourcen-Indexierungseinheit durchführt, wenn eine entsprechende Medien-Datenmodulnummer erhalten wird, Senden einer Antwort an das Medien-Verarbeitungsmodul und Fortfahren mit dem nächsten Schritt; wenn die Benutzer-Identifikatoren nicht gefunden sind, Antworten "Ressource nicht gefunden" (Resource Not Found) und Fortfahren mit Schritt 3:
Schritt 2, in dem das Medien-Verarbeitungsmodul Mediendaten von gekennzeichneten Benutzer-Identifikatoren von einem entsprechenden Medien-Datenmodul über das Netzwerk abruft, wobei das Medien-Datenmodul die Mediendaten an das Medien-Verarbeitungsmodul in Form von Datenströmen auf einer stabilen Rate sendet, bis die Mediendaten vollständig gesendet sind; nachdem das Medien-Verarbeitungsmodul eine bestimmte Menge der Mediendaten erhalten hat, Senden eines Befehls zum Starten der Medienwiedergabe von der Hauptsteuereinheit in dem Medien-Verarbeitungsmodul an eine Treibereinheit und zum Übertragen der Medien in den Puffer, die von den Medien-Datenmodul erhalten werden, entsprechend den Anforderungen einer Sammeleinheit, um stabile Mediendatenströme für den Benutzer bereitzustellen;
Schritt 3, Senden einer Fehlernachricht an das Benutzer-Zugriffsgerät, wenn die Medien-Sammeleinheit auf halbem Wege ausfällt oder die Benutzerressourcen nicht herausfinden kann.

## Revendications

1. Dispositif de stockage centralisé de données multimédia comprenant : un module de traitement de données multimédia (1) et un module de données multimédia (2) connectés entre eux ;
**caractérisé en ce que** ledit dispositif comprend en outre
un module de distribution de données multimédia (3) disposé entre le module de traitement de données multimédia (1) et le module de données multimédia (2) utilisant le mode de séparation dans lequel le module de traitement de données multimédia (1) et le module de données multimédia (2) sont respectivement extensibles, et respectivement reliés audit module de traitement de données multimédia (1) et audit module de données multimédia (2) par l'intermédiaire d'un réseau ;
ledit module de distribution de données multimédia (3) étant utilisé pour mettre en oeuvre la supervision et la gestion centralisée des données multimédia et le partage de charge du module de données multimédia (2) ; dans lequel
ledit module de traitement de données multimédia (1) est utilisé pour recevoir la demande d'opération de l'utilisateur et rapporter les résultats de l'opération de l'utilisateur, recueillir les données multimédia de l'utilisateur, organiser et mettre en tampon les données recueillies et transmettre lesdites données au module de données multimédia désigné (2) pour stockage ; et obtenir des flux de données multimédia stables à partir du module de données multimédia désigné (2) et transmettre lesdites données multimédia à l'utilisateur ;
ledit module de données multimédia (2) est utilisé pour recevoir la demande pour que le module de traitement de données multimédia (1) enregistre et lise les données multimédia, et pour organiser et mémoriser les données reçues, ainsi que pour fournir audit module de traitement de données multimédia (1) des flux de données multimédia stables ;
ledit module de distribution de données multimédia (3) est utilisé pour la supervision et le partage de charge du module de données multimédia (2), et la fourniture audit module de traitement de données multimédia (1) d'une fonction d'index de ressources.

2. Dispositif de stockage centralisé de données multimédia selon la revendication 1, **caractérisé en ce que** ledit module de traitement de données multimédia (1) comprend :
une unité de collecte, une unité de pilotage, une unité de communication et une unité de commande principale ;
ladite unité de collecte interagit avec l'unité de pilotage et est utilisée pour effectuer la collecte et la transmission des données multimédia ;
ladite unité de pilotage est utilisée pour recevoir des commandes d'opérations provenant de l'unité de commande principale pour demander à ladite unité de collecte d'effectuer des actions correspondantes, et pour rapporter les résultats des opérations à ladite unité de commande principale ;
ladite unité de communication est utilisée pour relier ledit module de traitement de données multimédia à un dispositif d'accès d'utilisateur (4), au module de distribution de données multimédia et au module de données multimédia, pour les faire communiquer entre eux par l'intermédiaire d'un protocole TCP/IP et pour effectuer la transmission de messages entre eux ;
ladite unité de commande principale est utilisée pour recevoir des commandes depuis le dispositif d'accès d'utilisateur (4), des rapports de l'unité de pilotage et des messages de réponse provenant dudit module de distribution de support (3) et dudit module de données multimédia (2) ; pour rapporter les résultats d'opérations du dispositif d'accès d'utilisateur (4), pour envoyer des commandes d'opérations à l'unité de pilotage, pour envoyer une demande d'index au module de distribution de données multimédia (3) et pour envoyer une demande de stockage au module de données multimédia (2) ; pour effectuer une analyse de commande du dispositif d'accès d'utilisateur (4) ; pour effectuer une gestion de distribution des ressources multicanaux du système ; pour demander l'obtention d'un module de données multimédia (2) au module de distribution de données multimédia (3), dans lequel des identifiants d'utilisateur sont stockés dans le module de données multimédia (2) ; si nécessaire, pour envoyer des commandes d'opérations à l'unité de pilotage ; pour recevoir et pour organiser les données multimédia reçues depuis ladite unité de collecte ou ledit module de données multimédia (2) et pour les transmettre audit module de données multimédia (2) ou à ladite unité de collecte.

3. Dispositif de stockage centralisé de données multimédia selon la revendication 2, **caractérisé en ce que** ladite unité de pilotage fournit une interface de fonction pour effectuer des opérations de base de ladite unité de collecte, telles que l'initialisation de l'unité de collecte, pour démarrer une lecture/un enregistrement audio/une télécopie et pour arrêter une lecture/un enregistrement audio/une télécopie, et pour envoyer une demande de données multimédia à ladite unité de collecte et à ladite unité de commande principale.

4. Dispositif de stockage centralisé de données multimédia selon l'une quelconque des revendications 1 à 3, **caractérisé en ce que** ledit module de distribution de données multimédia (3) comprend en outre : une unité d'indexation de ressources, une unité de communication et une unité de commande principale ;
ladite unité d'indexation de ressources est utilisée pour recevoir des commandes depuis l'unité de commande principale, pour exécuter une fonction de recherche de ressources et pour fournir une interface d'interrogation à l'extérieur ;
ladite unité de communication est utilisée pour effectuer la transmission de messages de communication par l'intermédiaire d'un protocole TCP/IP audit module de traitement de données multimédia (1) et audit module de données multimédia (2) ;
ladite unité de commande principale est utilisée pour recevoir des commandes depuis ledit module de traitement de données multimédia (1) et ledit module de données multimédia (2) ainsi que les résultats d'indexation de l'unité d'indexation de ressources ; pour envoyer une demande de supervision audit module de données multimédia (2) ; pour effectuer une gestion de distribution des canaux internes du système, pour indexer les identifiants d'utilisateur dudit module de traitement de données multimédia (1), pour gérer de façon dynamique ledit module de données multimédia (2) et pour analyser ainsi que pour distribuer de manière équilibrée la charge du module de données multimédia.

5. Dispositif de stockage centralisé de données multimédia selon l'une quelconque des revendications 1 à 4, **caractérisé en ce que** ledit module de données multimédia (2) comprend : une unité de distribution d'accès, une unité de lecture/écriture de données, un support d'enregistrement de données, une unité de commande principale et une unité de communication ;
ladite unité de distribution d'accès est disposée entre ladite unité de commande principale est ladite unité de lecture/écriture de données, et est utilisée pour effectuer la gestion des messages provenant de l'unité de commande principale, le partage de charge des opérations de l'unité de lecture/écriture de données, ainsi que pour distribuer la gestion des tampons de données ;
ladite unité de lecture/écriture de données est utilisée pour recevoir une demande depuis ladite unité de distribution d'accès (3) et pour renvoyer les résultats des opérations à l'unité de distribution d'accès (3) et pour effectuer des opérations en arrière-plan pour les opérations d'accès aux données du support ;
ladite unité de communication est utilisée pour effectuer la transmission de messages de communication par l'intermédiaire d'un protocole TCP/IP vers ledit module de traitement de données multimédia (1) et vers ledit module de distribution de données multimédia (3) ;
ladite unité de commande principale est utilisée pour recevoir une demande provenant dudit module de traitement de données multimédia (1) et une demande de supervision provenant dudit module de distribution de support (3), et pour rapporter les résultats audit module de traitement de données multimédia (1) et audit module de distribution de données multimédia (3) ; pour effectuer une gestion de répartition des multicanaux du système, pour analyser la demande provenant du module de traitement de données multimédia (1) et y répondre, et pour envoyer une demande de stockage à l'unité de distribution d'accès (3) si nécessaire ;
ledit support de stockage de données est utilisé pour effectuer le stockage des données multimédia conformément aux commandes d'opérations de ladite unité de lecture/écriture de données.

6. Dispositif de stockage centralisé de données multimédia selon l'une quelconque des revendications 1 à 5, **caractérisé en ce que** ledit module de traitement de données multimédia (1) et/ou ledit module de données multimédia (2) sont constitués d'une pluralité de modules de traitement de données multimédia et/ou de modules de données multimédia disposés en parallèle.

7. Dispositif de stockage centralisé de données multimédia selon la revendication 5, **caractérisé en ce que** ledit support de stockage de données est un support sur disque.

8. Procédé de stockage centralisé de données multimédia **caractérisé en ce que**
un module de traitement de données multimédia (1) et un module de stockage de données multimédia (2) sont prévus dans un mode de séparation dans lequel le module de traitement de données multimédia (1) et le module de données multimédia (2) sont respectivement extensibles ; et
un module de distribution de données multimédia (3) est prévu pour mettre en oeuvre une gestion centralisée des données multimédia et pour le partage de charge du module de données multimédia (2) en fonction de l'identifiant de l'utilisateur ; dans lequel
le procédé comprend les étapes suivantes :
une étape de stockage consistant à, lorsque des données multimédia d'utilisateur doivent être stockées, avant tout, enregistrer les identifiants des données d'utilisateur au niveau du module de distribution de données multimédia (3), et faire assigner par le module de distribution de données multimédia (3) un module de données multimédia (2) à un module de traitement de données multimédia (1) conformément à un mécanisme de partage de charge, et faire stocker par le module de traitement de données multimédia (1) les données multimédia d'utilisateur recueillies par l'intermédiaire d'un réseau ;
une étape de lecture consistant à, lorsque les données multimédia d'utilisateur doivent être lues, faire indexer par le module de distribution de données multimédia (3) le module de données multimédia (2), dans lequel les données d'utilisateur sont stockées, conformément aux identifiants de données d'utilisateur, et faire obtenir par le module de traitement de données multimédia (1) les données d'utilisateur à partir dudit module de données multimédia (2) par l'intermédiaire d'un réseau et lui faire transmettre les données d'utilisateur à l'utilisateur.

9. Procédé de stockage centralisé de données multimédia selon la revendication 8, **caractérisé en ce que** ladite étape de stockage comprend en outre les étapes suivantes :
étape 1, consistant à créer des identifiants d'utilisateur par service et envoyer une demande de stockage de données multimédia au module de traitement de données multimédia (2) par l'intermédiaire d'un dispositif d'accès d'utilisateur (4), faire envoyer par une unité de commande principale dans le module de traitement de données multimédia (1) une demande d'index au module de distribution de données multimédia (3) sur la base des identifiants dudit utilisateur ; si le module de distribution de données multimédia (3) recherche la présence desdits identifiants, obtenir alors un numéro de module de données de média et le renvoyer à l'unité de commande principale du module de traitement de données multimédia (1), passer à l'étape suivante ; si le résultat de recherche révèle l'absence desdits identifiants, assigner un numéro de module de données multimédia conformément au mécanisme de partage de charge et l'enregistrer dans une unité d'indexation de ressources, le renvoyer au module de traitement de données multimédia (1), et passer à l'étape suivante ;
étape 2, consistant à faire envoyer à nouveau par l'unité de commande principale du module de traitement de données multimédia (1) une demande pour démarrer le stockage de données vers le module de données multimédia (2) après avoir obtenu le module de données multimédia (2) depuis le module de distribution de données multimédia (3), après que le module de données multimédia correspondant (2) a reçu ladite demande, faire distribuer par l'unité de commande principale et une unité de distribution d'accès de celle-ci des ressources de canal et des ressources tampon, et renvoyer une réponse au module de traitement de données multimédia (1) si cette distribution a réussi, et passer à l'étape suivante ; sinon, passer à l'étape 5 ;
étape 3, consistant à faire demander par l'unité de commande principale du module de traitement de données multimédia une unité de pilotage de commencer à recueillir les données multimédia, après que l'unité de collecte a recueilli les données multimédia, faire informer par l'unité de pilotage l'unité de commande principale, faire organiser et mettre en tampon par l'unité de commande principale les données du flux de données multimédia d'utilisateur recueillies pendant la transmission des données dans le tampon au module de données multimédia correspondant (2) par transmission de réseau ;
étape 4, consistant à, après réussite du stockage des données multimédia, faire informer par le module de traitement de données multimédia (1) le module de distribution de données multimédia (3) de la confirmation des informations de données multimédia dudit utilisateur ; sinon, fermer la session des informations de données multimédia dudit utilisateur, et renvoyer les résultats au dispositif d'accès d'utilisateur (4) ;
étape 5, consistant à faire envoyer par le module de traitement de données multimédia (1) une demande d'erreur au dispositif d'accès d'utilisateur (4) et au module de distribution de données multimédia (3), faire fermer la session par le module de distribution de données multimédia (3) des identifiants d'utilisateur enregistrés après avoir reçu ladite demande d'erreur.

10. Procédé de stockage centralisé de données multimédia selon la revendication 8, **caractérisé en ce que** ladite étape de stockage comprend en outre les étapes suivantes :
étape 1, consistant à envoyer une demande d'identifiants d'utilisateur désignés pour lecture multimédia au module de traitement de données multimédia par l'intermédiaire d'un dispositif d'accès d'utilisateur, faire envoyer par le module de traitement de données multimédia une demande d'index à une unité de commande principale du module de distribution de données multimédia, faire exécuter par l'unité de commande principale du module de distribution de données multimédia une recherche dans une unité d'indexation de ressources, si on obtient un numéro de module de données multimédia correspondant, revenir au module de traitement de données multimédia et passer à étape suivante ; si lesdits identifiants d'utilisateur ne sont pas trouvés, renvoyer « Ressource non trouvée », et passer à l'étape 3 ;
étape 2, consistant à faire obtenir par le module de traitement de données multimédia de données multimédia des identifiants désignés d'utilisateur depuis un module de données multimédia correspondant par l'intermédiaire d'un réseau, faire renvoyer par le module de données multimédia des données multimédia au module de traitement de données multimédia à la manière d'un flux à une vitesse stable, jusqu'à ce que les données multimédia soient entièrement renvoyées ; après que le module de traitement de données multimédia a obtenu une certaine quantité des données multimédia, faire envoyer par l'unité de commande principale dans le module de traitement multimédia une commande pour commencer la lecture multimédia à une unité de pilotage et transmettre dans un tampon les données multimédia qui sont obtenues à partir du module de données multimédia, en fonction de l'exigence d'une unité de collecte, de façon à fournir à l'utilisateur des flux de données multimédia stables ;
étape 3, consistant à renvoyer un message de défaillance au dispositif d'accès d'utilisateur si l'unité de collecte de données multimédia ne parvient pas à lire jusqu'à la moitié ou ne peut pas trouver les ressources d'utilisateur.
